Europäisches Patentamt

European Patent Office

Office européen des brevets

(19)

(11) Numéro de publication : **0 060 173**
**B1**

(12)

# FASCICULE DE BREVET EUROPÉEN

(45) Date de publication du fascicule du brevet :
**15.08.84**

(21) Numéro de dépôt : **82400314.9**

(22) Date de dépôt : **23.02.82**

(51) Int. Cl.³ : **H 02 G   1/08**

(54) **Procédé de tirage de câbles en conduites.**

(30) Priorité : **10.03.81 FR 8104780**

(43) Date de publication de la demande :
**15.09.82 Bulletin 82/37**

(45) Mention de la délivrance du brevet :
**15.08.84 Bulletin 84/33**

(84) Etats contractants désignés :
**BE CH DE GB IT LI**

(56) Documents cités :
**DE-A- 2 457 769**
**DE-U- 7 302 773**
**FR-A- 1 398 590**
**FR-A- 2 191 314**
**SU-A-   744 807**
**US-A- 4 232 981**

(73) Titulaire : **Nonclercq, Bernard**
**Troguery**
**F-22450 La Roche - Derrien (FR)**

**Le Cabec, Pierre**
**Troguery**
**F-22450 La Roche-Derrien (FR)**

**Le Damany, François**
**Louannec**
**F-22700 Perros Guirec (FR)**

(72) Inventeur : **Nonclercq, Bernard**
**Troguery**
**F-22450 La Roche - Derrien (FR)**
Inventeur : **Le Cabec, Pierre**
**Troguery**
**F-22450 La Roche-Derrien (FR)**
Inventeur : **Le Damany, François**
**Louannec**
**F-22700 Perros Guirec (FR)**

(74) Mandataire : **Fort, Jacques et al**
**CABINET PLASSERAUD 84, rue d'Amsterdam**
**F-75009 Paris (FR)**

EP 0 060 173 B1

## 0 060 173

### Description

La présente invention concerne le domaine de la pose d'un câble par tirage dans une conduite. Elle trouve une application particulièrement importante constituée par la pose de câbles de télécommunication par fibres optiques dont les propriétés sont susceptibles d'être affectées par les contraintes au cours du tirage.

Les procédés traditionnels de pose des câbles, notamment en conduites multitubulaires, ne permettent guère de dépasser des longueurs de l'ordre de 300 m en général, de 600 m dans quelques cas favorables. Le facteur qui limite les longueurs de tirage est le frottement entre l'enveloppe du câble et la paroi de la conduite, qui lui-même détermine l'effort de tirage à exercer à l'extrémité du câble.

Pour tenter de réduire le coefficient de frottement entre câble et conduite, on a utilisé divers procédés. On a notamment obtenu une lubrification en interposant une graisse neutre entre la conduite et le câble en mouvement ou injecté un brouillard d'huile dans la conduite avant tirage. On a également réparti l'effort de tirage au long du câble et soulagé corrélativement l'effort appliqué à l'extrémité du câble en propulsant le câble, de forme adaptée, à l'aide de relais de tirage, également dénommés « chiens de tirage », munis de galets d'entraînement par friction et répartis le long du trajet du câble.

Toutes ces solutions connues présentent des inconvénients. Le graissage des conduites est une opération longue et pénible et la diminution du coefficient de frottement est en partie compensée par l'effet d'adhésion du câble à la conduite, dû à la graisse. Et la présence de graisse interdit de prévoir des chiens de tirage, car leurs galets glisseraient sur le câble. Ce dernier inconvénient existe également en cas de lubrification par brouillard d'huile. Les chiens de tirage ne peuvent être utilisés que si l'on travaille à sec et leur emploi est coûteux, les relais devant être d'autant plus rapprochés que le coefficient de friction est augmenté par le travail à sec.

Le document DE-U-7 302 773 décrit un dispositif de pose d'un câble dans une conduite. Le dispositif comporte une bande s'enroulant autour du câble, ladite bande étant pourvue d'une pluralité de billes qui sont solidarisées de façon permanente de la bande et qui sont utilisées de façon à réduire la friction entre les parois du câble et de la conduite.

On a également proposé (US-A-4 232 981) un procédé de tirage de câble en conduite suivant lequel on constitue un tapis de billes à la surface de la conduite. Pour cela, on fait circuler dans la conduite un mélange de liquide et de billes qui sont soit plus denses, soit moins denses que le liquide. Suivant le cas, les billes revêtent la partie basse ou haute de la conduite. Mais, dans la réalité, un câble tiré dans une conduite peut frotter sur n'importe quelle partie de la surface de la paroi. Il est souvent impossible et toujours peu commode de faire circuler un liquide dans une conduite de câble. Enfin, la plupart des câbles ne sont pas conçus pour baigner dans l'eau même temporairement.

La présente invention vise à fournir un procédé de tirage répondant mieux que ceux antérieurement connus aux exigences de la pratique, notamment en ce qu'il diminue les efforts de tirage tout en permettant d'utiliser des chiens de tirage de grandes longueurs.

Dans ce but, l'invention propose notamment un procédé suivant lequel on constitue, entre les surfaces du câble et de la conduite en déplacement relatif lors du tirage, un tapis de billes de diamètre très inférieur à celui du câble caractérisé en ce que l'on fait adhérer les billes, par voie électrostatique ou humidification, à l'ensemble de la surface du câble ou de la conduite.

Les efforts à exercer sont diminués, puisque l'on substitue un roulement au glissement utilisé antérieurement ; on augmente les longueurs de tirage possibles ; on conserve la possibilité d'utiliser des chiens de tirage, qui peuvent être beaucoup plus espacés que dans les techniques antérieures, ce qui se traduit par une économie notable. Il suffit en effet d'éliminer les billes avant passage du câble sur les galets des chiens de tirage, par exemple au moyen de brosses. Pratiquement, les longueurs de pose ne sont plus limitées que par la capacité des tourets ou les possibilités de fabrication de câbles.

Les billes utilisées seront généralement en matériau synthétique, notamment en polyamide ou polyéthylène. Leur diamètre pourra varier dans une plage assez large.

Pratiquement, on pourra aller d'un diamètre de 0,1 mm, au-dessous duquel les défauts de géométrie des conduites deviennent prépondérants, jusqu'à un diamètre de l'ordre de 1 mm, au-delà duquel on se heurte à des difficultés de mise en place et de constitution d'un tapis. Dans la pratique, les billets n'auront généralement pas un diamètre uniforme. Cette répartition granulométrique, qu'imposent d'ailleurs les tolérances de fabrication, semble bénéfique : les petites billes restent dans les endroits à frottement élevé tandis que les plus grosses sont rejetées sur les côtés, ce qui augmente la zone angulaire du câble porté par des billes. On pourra d'ailleurs prévoir des classes de billes, parmi lesquelles on choisira en fonction du diamètre du câble à tirer. A titre d'exemple, on peut prévoir une classe dont le diamètre va de 0,1 (ou mieux de 0,2) à 0,4 mm et une classe allant de 0,4 à 1 mm.

On choisira avantageusement des billes dont le diamètre est une fonction croissante du diamètre du câble. Pour un câble de diamètre compris entre 15 et 30 mm, on pourra notamment utiliser la première classe mentionnée ci-dessus ; pour un câble ayant un diamètre compris entre 60 et 80 mm, on pourra utiliser la seconde classe définie ci-dessus. Pour les dimensions intermédiaires, on peut envisager des billes dont la répartition granulométrique va de 0,2 à 0,5 mm.

Les billes peuvent être mises en place par des procédés extrêmement divers. En particulier, lorsque

2

les billes sont en matériau isolant, on peut les faire adhérer sur l'enveloppe du câble au fur et à mesure de l'avance de celui-ci en faisant passer le câble dans une zone chargée en billes, après dépôt de charges électriques sur l'enveloppe isolante du câble ou après humidification de cette enveloppe. On peut aussi constituer le tapis de billes sur la paroi de la conduite par soufflage de billes en suspension depuis une extrémité de la conduite, soufflage qui peut se faire sous une pression variable, d'abord élevée pour propulser les billes dans la partie la plus éloignée du point d'injection, puis sous pression réduite. Lorsque la conduite est en matériau diélectrique tel que PCV, ce qui est le cas le plus fréquent, les billes adhèrent à la paroi de la conduite.

En règle générale, les billes seront en un matériau de dureté inférieure à celle de l'enveloppe du câble et à celle de la conduite, pour éviter une dégradation sous leur action.

Comme indiqué plus haut, la mise en œuvre du procédé suivant l'invention n'exclut pas l'utilisation de chiens de tirage. On peut effectuer la pose en tirant sur la partie terminale du câble et en entraînant ce câble à l'aide de relais placés en des points répartis le long de la conduite. Dans ce cas, on élimine la majeure partie au moins des billes entraînées par le câble en amont de chaque relais et on réinjecte ces billes en aval du relais.

· L'invention sera mieux comprise à la lecture de la description qui suit de divers modes d'exécution de l'invention, donnés à titre d'exemples non limitatifs. La description se réfère aux dessins qui l'accompagnent, dans lesquels :

la figure 1   est un schéma de principe montrant comment s'effectue le tirage de câble en grande longueur, à l'aide de relais de tirage suivant un processus classique ;

la figure 2   est une vue en coupe d'un dispositif d'injection de billes en conduite, destiné à la mise en œuvre d'un premier mode d'exécution de l'invention ;

la figure 3   est un schéma de principe montrant un dispositif d'élimination et de récupération au moins partielles des billes en vue de l'utilisation d'un relais de tirage ;

les figures 4, 5 et 6   sont des schémas de principe montrant des dispositifs de constitution d'un tapis de billes par dépôt des billes sur le câble au fur et à mesure de son tirage (figures 4 et 5) ou dans la conduite avant tirage (figure 6).

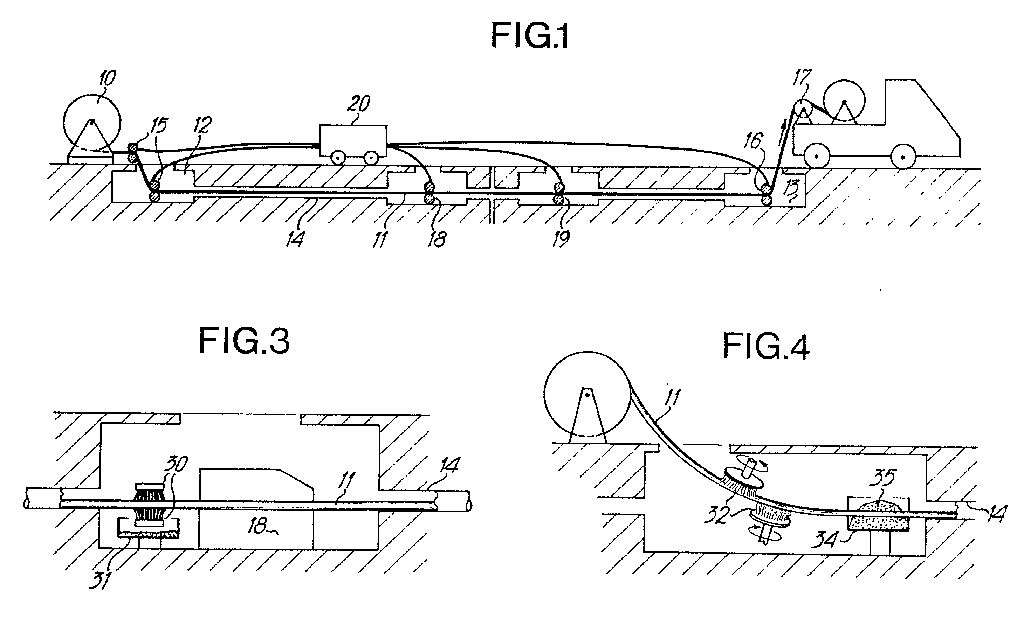

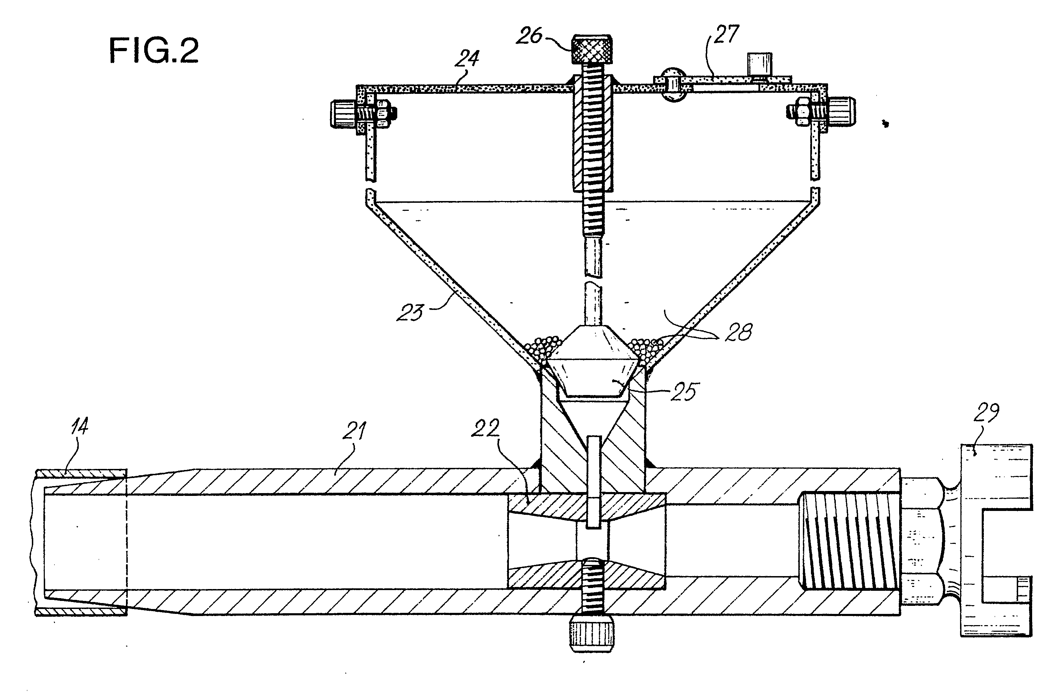

Avant de décrire l'invention, on rappellera brièvement comment s'effectue à l'heure actuelle le tirage de câble en grande longueur à sec. On utilise alors une installation du genre montré en figure 1. Le touret 10 de câble 11 à poser est placé à proximité de l'accès 12 à partir duquel doit s'effectuer le tirage vers une chambre 13, dans une conduite 14 généralement multitubulaire. Des jeux de galets 15 et 16 sont prévus pour guider le câble à l'entrée de la conduite et la câblette de tirage à la sortie. Un treuil 17 permet d'exercer, sur l'extrémité du câble, par l'intermédiaire de la câblette, une force de tirage. L'installation montrée en figure 1, destinée au tirage de longueurs importantes, comprend des relais de tirage intermédiaires 18 et 19. Une commande électrique centrale 20 permet de synchroniser l'entraînement des divers galets.

Ce procédé classique permet de tirer des câbles sur des longueurs qui dépendent de ce dernier, mais ne peuvent guère dépasser 600 m sauf dans des conditions particulièrement favorables. De plus, les efforts à exercer sur le câble, et donc les contraintes subies par celui-ci, sont élevés. Ces deux inconvénients sont particulièrement graves lorsque l'on veut poser des câbles à fibres optiques, car les épissures nécessaires à l'extrémité de chaque tronçon se traduisent par des pertes et les contraintes exercées sur les fibres peuvent modifier leurs caractéristiques. Le problème des pertes devient d'autant plus aigu que l'on cherche à travailler avec des longueurs d'ondes élevées, égales ou supérieures à 1,3 micron.

On décrira des exemples de dispositions qui permettent de multiplier par un facteur de l'ordre de 5 les longueurs de tirage.

Dans tous les modes de réalisation qui vont maintenant être décrits, on constitue un tapis de billes entre le câble et la conduite, les billes étant en un matériau un peu moins dur que celui de la conduite et celui de l'enveloppe du câble. Dans la pratique, la conduite est fréquemment en chlorure de polyvynile, tandis que l'enveloppe du câble est en polyéthylène haute densité ou basse densité. Dans ce cas, on sera généralement amené à utiliser des billes en matériau polymère de densité inférieure à 1. On choisira avantageusement un matériau dont le coefficient de frottement est relativement faible ; s'il y a écrasement d'une fraction des billes, on réduit ainsi les frottements de glissement qui restent de toute façon faibles, car l'aire sur laquelle s'exerce un frottement se réduit à la somme des surfaces des billes écrasées.

Comme on l'a indiqué plus haut, les billes peuvent être mises en place soit dans la conduite avant introduction du câble, soit sur le câble au fur et à mesure de son entrée dans la conduite.

La figure 2 montre un dispositif permettant d'introduire les billes avec une homogénéité satisfaisante tout le long de la conduite par injection pneumatique. Ce dispositif comprend un corps tubulaire 21 dans lequel est placé un venturi 22. Une des extrémités du corps est prévue pour s'emboîter dans une conduite 14. L'autre extrémité est munie d'un tuyau d'amenée d'air sous pression. Sur le corps 21 est fixé un réservoir 23 en forme de trémie munie d'un couvercle d'obturation 24. Un conduit reliant la partie basse du réservoir 23 au col du venturi est muni d'un siège coopérant avec un obturateur 25. Une tige filetée porte l'obturateur et fait saillie hors du couvercle, pour permettre le réglage de la position de l'obturateur à l'aide d'un bouton moleté 26. Un volet rotatif 27 permet de dégager ou de fermer une ouverture prévue dans le couvercle 24. Le réservoir est avantageusement en matière transparente pour permettre une surveillance visuelle du niveau de la masse de billes 28 qui l'occupe. Le venturi 22 et le couvercle 24 peuvent être fixés au moyen de vis permettant un démontage facile.

La mise en œuvre du procédé suivant l'invention à l'aide du dispositif de la figure 1 est la suivante. Le dispositif est mis en place à l'extrémité de la conduite 14 dans laquelle on veut constituer un tapis de billes. Le raccord 29 est relié à une source d'air comprimée, munie d'un manodétendeur. Le tronçon de conduite sur lequel on doit constituer le tapis de billes est ensuite délimité, par exemple par un grillage terminal. Une pression d'air de 6 à 7 bars est généralement satisfaisante pour les conduites de diamètre habituel (42 à 100 mm).

Les billes placées dans le dispositif 28 seront choisies en fonction de nombreux paramètres, tels que la nature de l'enveloppe du câble et de la conduite, la rugosité de la paroi de celle-ci et le diamètre du câble. Un diamètre moyen des billes de l'ordre du centième du diamètre du câble donnera fréquemment de bons résultats. Toutefois, il est préférable de ne pas descendre au-dessous d'un diamètre de 0,1 mm, du fait notamment de la rugosité des conduites courantes, et de ne pas dépasser 1 mm, pour des questions de mise en place. Il est souhaitable d'utiliser des billes en matériau de densité inférieure à 1 pour en faciliter le transport.

Le tapis de billes est ensuite constitué progressivement, à partir de la zone de la conduite la plus éloignée du dispositif. Pour cela, on injecte les billes sous une pression d'air que l'on diminue au fur et à mesure de la mise en place. Le débit de billes est réglé en agissant sur l'obturateur 25. On arrive ainsi à obtenir un tapis de billes suffisamment régulier pour éviter la présence de brèches. La pratique a montré toutefois que, lorsque l'on utilise des billes de relativement grand diamètre, ce résultat n'est atteint qu'à condition de diminuer progressivement la pression d'injection au fur et à mesure de la mise en place. Les billes étant aspirées par la dépression qui règne au col du venturi, on devra généralement compenser la variation de pression motrice par ajustage de la section de passage des billes. Les billes s'électrisent par frottement et adhèrent à la conduite une fois déposées.

Des essais effectués dans des conditions représentatives du tirage réel des câbles en conduite rectiligne avec traction uniquement sur l'extrémité (c'est-à-dire suivant la technique la moins coûteuse), ont montré que les coefficients de frottement étaient réduits dans des proportions considérables. Le tableau ci-dessous montre les coefficients de frottement au tirage d'un câble de 52 mm de diamètre extérieur en conduite de chlorure de polyéthylène.

|  | Polyéthylène haute densité | Polyéthylène basse densité |
|---|---|---|
| Tirage à sec | 0,25 à 0,35 | 0,40 à 0,60 |
| Câble huilé | 0,10 à 0,15 | 0,20 à 0,30 |
| Câble sur lit de microbilles | 0,045 à 0,06 | 0,05 à 0,06 |

On voit que, quelle que soit la qualité du polyéthylène constitutif de l'enveloppe du câble, le coefficient de frottement est divisé par 5 environ par suite de la mise en œuvre de l'invention.

Cette diminution permet, dans des conduites homogènes, de multiplier, par un facteur qui sera généralement compris entre 4 et 6, la longueur de tirage possible.

Si le câble tiré doit traverser plusieurs chambres d'accès intermédiaires dans lesquelles sont disposés des relais de tirage (disposition montrée en figure 1), il est nécessaire d'éviter le formation d'un gainage de billes entre les galets d'entraînement des relais et l'enveloppe du câble. Pour cela, il est possible d'éliminer et de récupérer une fraction au moins des billes à l'aide de moyens de nature très diverse. Dans le mode de réalisation montré en figure 3, cette récupération s'effectue à l'aide d'un jeu de brosses fixes 30 sur lesquelles frotte le câble en amont du relais de tirage 18. Un bac 31 permet de récupérer les billes détachées par les brosses.

Dans le cas où la conduite a un parcours très sinueux, on peut par ailleurs injecter dans la conduite un brouillard d'eau ou d'huile de façon que les billes se collent sur toutes les parois de la conduite plutôt que de se déposer préférentiellement sur le fond. Ainsi, les frottements sont diminués même lorsque le câble porte contre les côtés ou la partie haute de la conduite. Mais cette solution implique évidemment que le tirage ne s'effectue qu'en extrémité, sans relais de tirage.

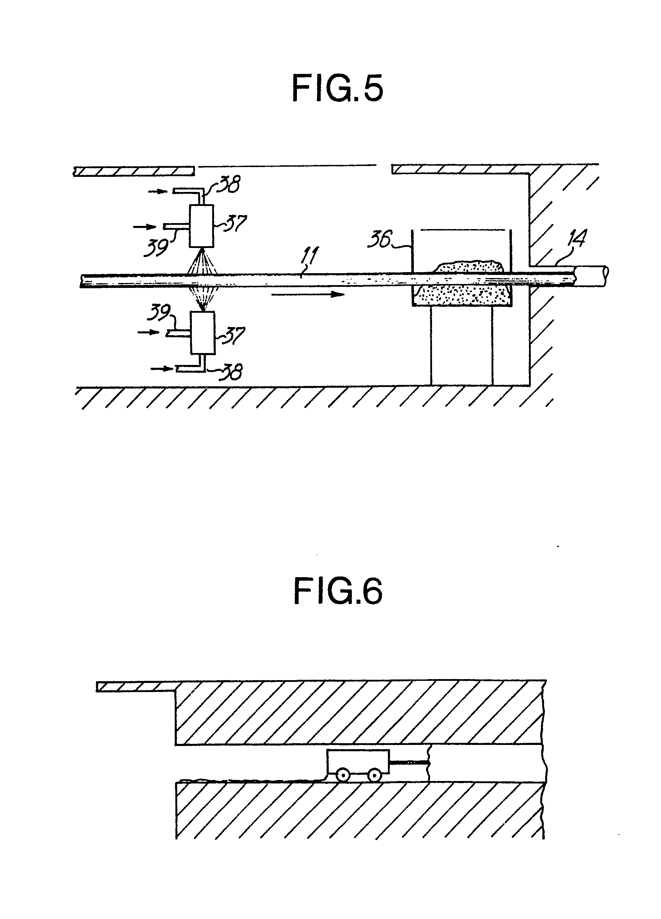

Dans les variantes de réalisation montrées en figures 4 et 5, les billes sont placées sur le câble avant entrée de celui-ci dans la conduite. On peut faire adhérer les billes au câble par divers moyens, et notamment par voie électrostatique (à condition que les billes et l'enveloppe soient isolantes) et par humidification.

4

La mise en œuvre du procédé électrostatique est extrêmement simple. Dans le cas montré en figure 4, des charges électrostatiques sont déposées sur le câble 11 à l'aide de brosses 32 en matériau isolant. Ces brosses rotatives 32 sont placées en amont d'un réservoir 34 occupé par une masse de billes 35 et percé d'ouvertures de passage du câble. Un tel système peut être combiné avec celui montré en figure 3 au niveau des chambres d'accès intermédiaires.

Dans le cas montré en figure 5, le câble 11 est recouvert d'un brouillard d'eau par pulvérisation à un emplacement situé en amont d'un réservoir de billes 36 qu'il traverse avant de pénétrer dans la conduite 14. L'humidification peut s'effectuer à l'aide de pulvérisateurs classiques 37, munis d'une alimentation en air comprimé 38, qui transforment l'eau admise par une alimentation 39 en un brouillard de fines gouttelettes.

Au lieu de faire passer le câble dans un réservoir 34 ou 36, on peut le faire circuler à un emplacement dans lequel on maintient une pluie de microbilles en provenance d'une trémie. Cette solution permet généralement d'obtenir un revêtement plus homogène que la précédente et elle s'adapte mieux aux conduites présentant un tracé irrégulier. En contrepartie, elle est plus longue à mettre en œuvre sur des conduites de grande longueur. Elle ne permet pas de constituer un lit de de billes de diamètre proche de la limite supérieure de 1 mm mentionnée plus haut.

On peut utiliser des solutions autres que le soufflage pour constituer un lit de billes dans la conduite avant tirage du câble, bien que le soufflage paraisse la solution la plus avantageuse. On peut notamment tirer un réservoir de distribution de billes à l'aide d'un filin le long de la conduite. Cette solution a toutefois l'inconvénient d'être longue et de ne constituer un lit que sur le fond de la conduite, de sorte que le frottement sur les côtés et en haut de la conduite ne sont pas réduits. Cette solution aura donc surtout de l'intérêt en cas de parcours de longueur modérée.

## Revendications

1. Procédé de tirage de câble (11) en conduite (14), suivant lequel on constitue, entre les surfaces du câble et de la conduite en déplacement relatif lors du tirage ultérieur, un tapis de billes de diamètre très inférieur à celui du câble, caractérisé en ce qu'on fait adhérer les billes, par voie électrostatique ou humidification, à l'ensemble de la surface du câble ou de la conduite.

2. Procédé suivant la revendication 1, caractérisé en ce qu'on fait adhérer les billes à l'enveloppe du câble au fur et à mesure de l'avance de celui-ci par passage du câble dans une zone chargée en billes, après dépôt de charges électriques à l'aide de brosses mobiles (32) sur l'enveloppe isolante du câble ou après humidification de l'enveloppe.

3. Procédé suivant la revendication 1, caractérisé en ce que l'on constitue le tapis de billes sur la paroi de la conduite par soufflage de billes en suspension depuis une extrémité de la conduite.

4. Procédé suivant la revendication 3, caractérisé en ce que l'on souffle les billes sous une pression variable, d'abord élevée pour propulser les billes dans la partie la plus éloignée du point d'injection, puis sous pression réduite.

5. Procédé suivant l'une quelconque des revendications précédentes, caractérisé en ce qu'on utilise des billes en matériau isolant électrique, avantageusement en matière synthétique polymère, de dureté inférieure à celle de l'enveloppe du câble et de la conduite.

6. Procédé suivant la revendication 4, caractérisé en ce que l'on utilise des billes en polyamide, polyester ou polyéthylène de diamètre compris entre 0,1 et 1 mm.

7. Procédé suivant l'une quelconque des revendications précédentes, caractérisé en ce que l'on donne aux billes un diamètre fonction croissante du diamètre du câble, variable entre 0,1 et 0,4 mm pour un diamètre de câble compris entre 15 et 30 mm, entre 0,2 et 0,5 mm pour un diamètre de câble compris entre 30 et 60 mm jusqu'à un diamètre allant de 0,4 à 1 mm pour un câble ayant un diamètre compris entre 60 et 80 mm.

8. Procédé suivant l'une quelconque des revendications 1 à 7, caractérisé en ce que l'on utilise des billes ayant un diamètre de l'ordre du centième du diamètre du câble.

9. Procédé suivant l'une quelconque des revendications précédentes, suivant lequel on effectue le tirage par traction sur la partie terminale du câble et par entraînement du câble à l'aide de relais de tirage (18) placés en des points répartis le long de la conduite (14), caractérisé en ce que l'on élimine la majeure partie au moins des billes entraînées par le câble en amont de chaque relais (18).

10. Procédé suivant l'une quelconque des revendications précédentes, mettant en œuvre des relais de tirage intermédiaires, caractérisé en ce qu'on élimine, par brossage, la majeure partie au moins des billes entraînées par le câble en amont de chaque relais, et en ce que l'on réinjecte ces billes en aval du relais.

## Claims

1. A method for pulling a cable (11) in a conduit (14), wherein a layer of balls having diameters quite lower than that of the cable is formed between the surfaces of the cable and of the conduit which are in relative movement during later pulling of the cable, characterized in that the balls are adhered to the whole of the surface of the cable or conduit by electrostatic forces or moistering.

2. Method according to claim 1, characterized in that the balls are adhered to the envelope of the cable as the cable is advanced by passing the cable through a ball-loaded zone, after electric charges have been deposited on the electrically insulating envelope of the cable by way of movable brushes (32) or after moistering of the envelope.

3. Method according to claim 1, characterized in that the layer of balls is formed on the whole of the conduit by blowing balls which are in suspension from an end of the conduit.

4. Method according to claim 3, characterized in that the balls are blown under a variable pressure, which is firstly high for moving the balls up to the part which is most remote from the injection point, then under a reduced pressure.

5. Method according to any one of the preceding claims, characterized in that the balls are of electrically insulating material, advantageously of polymer synthetic material, having a hardness which is lower than that of the enveloppe of the cable and of the conduit.

6. Method according to claim 4, characterized in that the balls are of polyamide, polyester or polyethylene, with a diameter of from 0.1 to 1 mm.

7. Method according to any one of the preceding claims, characterized in that the balls have a diameter which is an increasing function of the diameter of the cable, which is variable between 0.1 and 0.4 mm for a cable diameter of from 15 to 30 mm ; between 0.2 and 0.5 mm for a cable diameter of from 30 to 60 mm ; and of from 0.4 to 1 mm for a cable having a diameter comprised between 60 and 80 mm.

8. Method according to any one of claims 1-7, characterized in that the balls have a diameter of about one hundredth of the diameter of the cable.

9. Method according to any one of the preceding claims, wherein pulling is achieved by exerting a tractive force on the end portion of the cable and by driving the cable with pulling relays (18) which are located at points distributed along the conduit (14), characterized in that the greater portion at least of the balls which have been drawn by the cable are eliminated upstream of each relay (18).

10. Method according to any one of the preceding claims, which makes use of intermediate pulling relays, characterized in that the greater portion at least of the balls which have been drawn by the cable are eliminated upstream of each relay by brushing and are re-injected downstream of the relay.

**Ansprüche**

1. Verfahren zum Einziehen eines Kabels (11) in ein Leitungsrohr (14), bei welchem zwischen der Oberfläche des Kabels und der Oberfläche des Leitungsrohrs in Relativverschiebung beim späteren Ziehen ein Kugelteppich gebildet wird, wobei der Durchmesser der Kugeln dieses Teppichs wesentlich kleiner ist als der Durchmesser des Kabels, dadurch gekennzeichnet, daß man ein Anhaften der Kugeln an der Oberfläche des Kabels oder an der Oberfläche des Leitungsrohrs auf elektrostatischem Weg oder durch Befeuchtung herbeiführt.

2. Verfahren nach Anspruch 1, dadurch gekennzeichnet, daß man die Kugeln an der Umhüllung des Kabels nach Maßgabe von dessen Forbewegung anhaften läßt, indem man des Kabels durch eine mit Kugeln beladene Zone hindurchführt, nachdem auf der isolierenden Umhüllung des Kabels mit Hilfe von beweglichen Bürsten (32) elektrischen Ladungen aufgebracht wurden oder die Umhüllung befeuchtet wurde.

3. Verfahren nach Anspruch 1, dadurch gekennzeichnet, daß der Kugelteppich auf der Wandung des Leitungsrohrs gebildet wird, indem in einer Suspension befindliche Kugeln von einem Ende des Leitungsrohrs aus eingeblasen werden.

4. Verfahren nach Anspruch 3, dadurch gekennzeichnet, daß die Kugeln mir variablem Druck eingeblasen werden, daß dieser Druck zunächst hoch ist, um die Kugeln in den von dem Einspeisepunkt am weistesten entfernten Teil zu treiben, und daß sodann mit reduziertem Druck gearbeitet wird.

5. Verfahren nach einem der vorhergehenden Ansprüche, dadurch gekennzeichnet, daß Kugeln aus elektrisch isolierendem Material, vorzugsweise aus einem polymeren Kunststoff, verwendet werden, dessen Härte geringer ist als die Härte der Umhüllung des Kabels und des Leitungsrohrs.

6. Verfahren nach Anspruch 4, dadurch gekennzeichnet, daß Kugeln aus Polyamid, Polyester oder Polyäthylen verwendet werden, deren Durchmesser zwischen 0,1 und 1 mm liegt.

7. Verfahren nach einem der vorhergehenden Ansprüche, dadurch gekennzeichnet, daß die verwendeten Kugeln einen Durchmesser besitzen, der gemäß einer ansteigenden Funktion vom Kabeldurchmesser abhängt und veränderbar ist zwischen 0,1 und 0,4 mm für einen zwischen 15 und 30 mm liegenden Kabeldurchmesser, zwischen 0,2 und 0,5 mm für einen zwischen 30 und 60 mm liegenden Kabeldurchmesser bis zu einem von 0,4 bis 1,0 mm reichenden Durchmesser für einen zwischen 60 und 80 mm liegenden Kabeldurchmesser.

8. Verfahren nach einem der Ansprüche 1 bis 7, dadurch gekennzeichnet, daß Kugeln verwendet werden, deren Durchmesser in der Größenordnung von einem Zehntel des Kabeldurchmessers liegt.

9. Verfahren nach einem der vorhergehenden Ansprüche, bei welchem das Einziehen des Kabels durch Zugausübung auf den Endbereich des Kabels und durch Antrieb des Kabels mit Hilfe von Einziehzwischenstellen (18) erfolgt, die an längs des Leitungsrohrs (14) verteilten Punkten angeordnet sind, dadurch gekennzeichnet, daß wenigstens der größte Teil derjenigen Kugeln entfernt wird, die von dem Kabel in den Bereich oberhalb der Einziehzwischenstelle (18) mitgeschleppt werden.

10. Verfahren nach einem der vorhergehenden Ansprüche ; bei dem Einziehzwischenstellen verwendet werden, dadurch gekennzeichnet, daß wenigstens der größte Teil derjenigen Kugeln durch Bürsten entfernt wird, die von dem Kabel in den Bereich oberhalb der Einziehzwischenstelle (18) mitgeschleppt werden, und daß diese Kugeln in Bereich unterhalb der Einziehzwischenstelle wieder eingespeist werden.

# FIG.1

# FIG.3

# FIG.4

0 060 173

FIG.2

0 060 173

# FIG.5

# FIG.6